(19) Europäisches Patentamt
European Patent Office
Office européen des brevets

(11) Veröffentlichungsnummer: **0 259 726**
**A2**

(12) **EUROPÄISCHE PATENTANMELDUNG**

(21) Anmeldenummer: **87112571.2**

(22) Anmeldetag: **28.08.87**

(51) Int. Cl.⁴: **C08G 18/58**, C08G 18/70, C08G 18/16, C08G 59/14, C09D 3/58, H05K 3/36, H03H 9/25, G03F 7/26

(30) Priorität: **11.09.86 DE 3630960**

(43) Veröffentlichungstag der Anmeldung: **16.03.88 Patentblatt 88/11**

(84) Benannte Vertragsstaaten: **AT BE CH DE FR GB IT LI LU NL SE**

(71) Anmelder: **Siemens Aktiengesellschaft Berlin und München**
**Wittelsbacherplatz 2**
**D-8000 München 2(DE)**

(72) Erfinder: **Ahne, Hellmut, Dr.**
**Heidestrasse 6**
**D-8551 Röttenbach(DE)**
Erfinder: **Plundrich, Winfried**
**Stahlstrasse 13**
**D-8500 Nürnberg(DE)**

(54) **Photopolymere auf Epoxidharzbasis.**

(57) Photopolymere auf Epoxidharzbasis, welche ohne aufwendige Reinigungsoperationen und damit kostengünstig herstellbar sind, bestehen aus Additionsprodukten von olefinisch ungesättigten Monoisocyanaten mit hydroxylgruppenhaltigen Epoxiden. Derartige Photopolymere sind für Anwendungen auf dem Schaltungs-und Leitungssektor als Schutz-und Isolierschichten geeignet.

EP 0 259 726 A2

## Photopolymere auf Epoxidharzbasis

Die Erfindung betrifft Photopolymere auf Epoxidharzbasis sowie deren Herstellung und Verwendung.

Photopolymere, d.h. photoreaktive bzw. photovernetzbare Polymere, auf Epoxidharzbasis sind bereits bekannt (siehe: "Chimia", Bd. 38 (1984), Seiten 13 bis 20). Diese Photopolymeren weisen Epoxidendgruppen auf, in der Polymerkette sind lichtempfindliche Chalkongruppen angeordnet, d.h. Gruppen folgender Struktur: $-C_6H_4-CH=CH-CO-C_6H_4-$. Die bekannten Photopolymeren werden in einer mehrstufigen Synthese hergestellt, wobei unter anderem Epichlorhydrin zum Einsatz gelangt. Synthesebedingt enthalten diese Photopolymeren auf Epoxidharzbasis somit Chlorid. Da Photopolymere auf verschiedenen Anwendungsgebieten aber keine Chloridionen enthalten dürfen, weil diese zu vorzeitiger Korrosion führen, sind hierbei aufwendige Reinigungsoperationen erforderlich, um die Chloridionen aus den Reaktionsprodukten zu entfernen. Dies wiederum führt aber zu einer Verteuerung der hergestellten Produkte.

Photopolymere werden beispielsweise in der Feinstleitertechnik als Lötstopp-und Isolierlack benötigt. Derartige Photopolymere müssen aber ein spezielles Eigenschaftsspektrum aufweisen, sie müssen nämlich wärmebeständig sein und sich zu lötbadresistenten, rißfreien Filmen verarbeiten lassen und sie müssen bei einmaliger Beschichtung von korrosionsempfindlichen Schaltungen diese wirksam gegen Feuchte und Korrosion schützen. Darüber hinaus müssen derartige Photopolymere präparativ einfach und damit preisgünstig herstellbar sein und mit kurzen Belichtungs-, Entwicklungs-und Aushärtungs zeiten kostengünstig verarbeitet werden können.

Als Lötstopplacke auf der Basis von Photopolymeren werden bislang die genannten Epoxidharze mit eingebauten photoreaktiven Chalkongruppen verwendet. Nachteilig bei diesen Lötstopplacken ist, daß daraus hergestellte Lackschichten nur dann auch als Korrosionsschutz wirksam sind, wenn eine aufwendige Mehrfachbeschichtung erfolgt. Wegen der kurzkettigen Polymerbasis ist ferner eine mehrstündige thermische Nachhärtung erforderlich. Darüber hinaus ist, wie bereits ausgeführt, das Herstellungsverfahren aufwendig und damit teuer.

Aufgabe der Erfindung ist es, Photopolymere auf Epoxidharzbasis bereitzustellen, welche ohne aufwendige Reinigungsoperationen und damit kostengünstig herstellbar und für Anwendungen auf dem Schaltungs-und Leitungssektor als Schutz-und Isolierschichten geeignet sind.

Dies wird erfindungsgemäß dadurch erreicht, daß die photoreaktiven Epoxidharze aus Additionsprodukten von olefinisch ungesättigten Monoisocyanaten mit hydroxylgruppenhaltigen Epoxiden bestehen.

Bei den erfindungsgemäßen Photopolymeren sind die photoreaktiven Gruppen, d.h. die die olefinisch ungesättigte Struktur enthaltenden Gruppen, über Urethanbrücken an das Basispolymer gebunden, welche bei der Addition der Monoisocyanate an die Hydroxylgruppen der polymeren Epoxide gebildet werden. Photoreaktive Epoxidharze mit einer derartigen Struktur, welche ein überraschendes Eigenschaftsspektrum aufweisen, sind bisher nicht bekannt.

Die erfindungsgemäßen photoreaktiven Epoxidharze sind präparativ sehr einfach und gelfrei herzustellen. Sie zeichnen sich durch eine hohe Löslichkeit in vielen Lösungsmitteln bzw. Lösungsmittelgemischen mit einem breiten Siedepunktsbereich aus. Daraus hergestellte Lösungen mit einem weiten Viskositätsbereich von ca. 10 bis 5000 mPa.s bleiben bei Raumtemperatur über Wochen hinweg gelfrei und sind damit überraschend lange lagerstabil. Mit diesen Lösungen können in nur einem Beschichtungsvorgang transparente helle Filme mit einer glatten homogenen Oberfläche in einem breiten Schichtdickenbereich von beispielsweise 0,01 bis 500 µm erzeugt werden. Die Schichten sind von hoher Reinheit und Feuchteresistenz, sie zeigen darüber hinaus gute elektrische Kennwerte, die sich auch im Feuchteklima überraschenderweise nicht bzw. nur unwesentlich ändern.

Die erfindungsgemäßen photoreaktiven Epoxidharze entsprechen somit den Forderungen an einen Photolack für die Feinstleitertechnik mit dauerhafter Schutzfunktion, insbesondere wenn mit Epoxidhärtern eine thermische Nachhärtung der photoreaktiven Epoxidharze erfolgt. Aus den erfindungsgemäßen Photopolymeren hergestellte Schichten zeichnen sich dadurch aus, daß sie unter Lötbadbedingungen in ihrer Oberflächenqualität nicht beeinträchtigt werden. Darüber hinaus ist die Haftung zum Lot so gering, daß ein unerwünschtes Kleben von Lotperlen an der Schichtoberfläche vermieden wird.

Die erfindungsgemäßen Photopolymeren können durch Strahlung vernetzt und dadurch in Polymere mit hoher Wärmeformbeständigkeit übergeführt werden (siehe dazu die gleichzeitig eingereichte europäische Patentanmeldung "Verfahren zur Herstellung wärmebeständiger strukturierter Schichten auf Epoxidharzbasis", Anmeldenummer ......... - VPA 86 P 3327 E).

Die erfindungsgemäßen photoreaktiven Epoxidharze weisen im allgemeinen folgende Struktur auf:

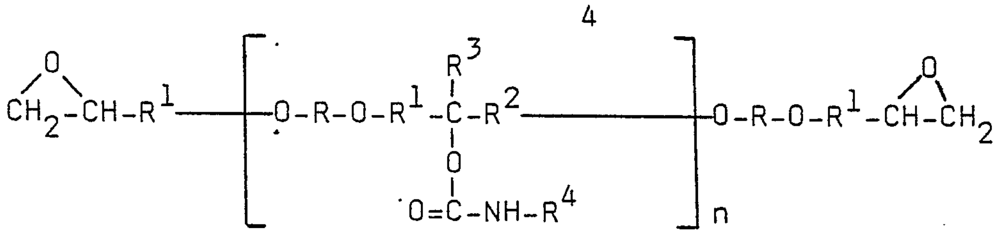

Dabei liegt n zwischen 1 und 20.

Für R, $R^1$, $R^2$, $R^3$ und $R^4$ gilt folgendes:

R ist ein - gegebenenfalls halogenierter - divalenter, d.h. difunktioneller Rest aromatischer und/oder aliphatischer und/oder cycloaliphatischer, gegebenenfalls Heteroatome aufweisender, und/oder heterocyclischer Struktur;

$R^1$ ist ein divalenter aliphatischer Rest;

$R^2$ ist ein - gegebenenfalls halogensubstituierter -divalenter aliphatischer und/oder cycloaliphatischer Rest;

$R^3$ ist Wasserstoff oder eine - gegebenenfalls halogensubstituierte - Alkylgruppe;

$R^4$ ist eine ¨ber eine aliphatische und/oder cycloaliphatische und/oder aromatische Brücke gebundene olefinisch ungesättigte Gruppe, beispielsweise eine allylether-oder maleinimidhaltige Gruppe und insbesondere eine - gegebenenfalls substituierte - (meth)acrylesterhaltige Gruppe.

Die Reste R, $R^1$, $R^2$, $R^3$ und $R^4$ haben insbesondere folgende Bedeutung:

R = 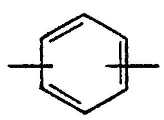 , 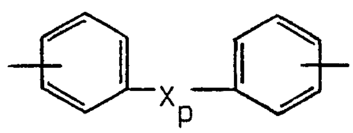 , 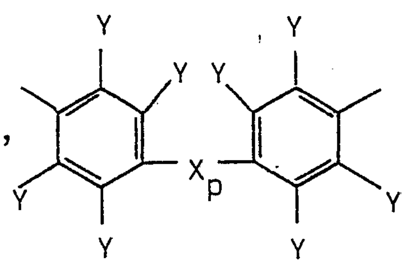 ,

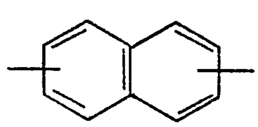 , 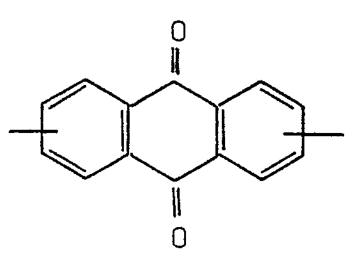 ,

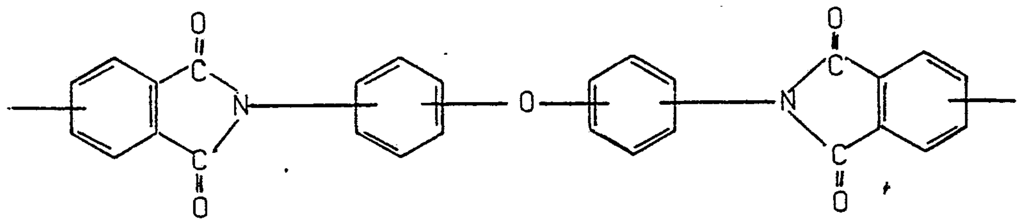,

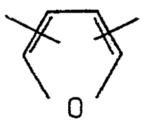, 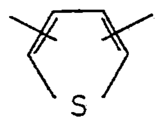, 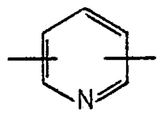, 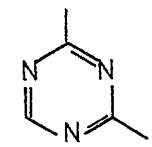, 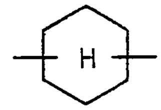,

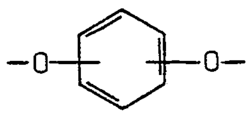, 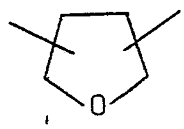,

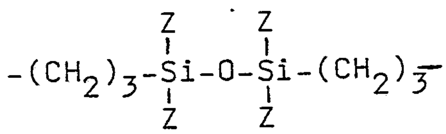, $-(CH_2)_q-$ und $-(CF_2)_r-$,

wobei p = 0 oder 1, q = 2 bis 14, r = 2 bis 18, und für X, Y und Z folgendes gilt:

X = 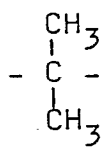, 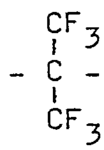, $-O-$, 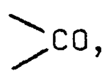, 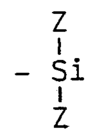,

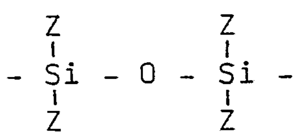, $-SO_2-$, 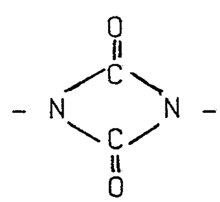,

- S - , 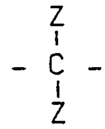 ;

Y = H, F, Cl, Br, $-CH_3$, 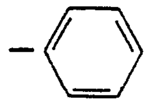 ;

Z = $-CH_3$, $-O-CH_3$, $-O-CF_3$,

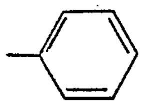 , $-CH=CH_2$ , $-CF_3$ ;

$R^1$ = $-CH_2-$ , 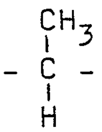 , 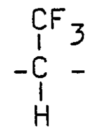 ;

$R^2$ = $-CH_2-$, $-CF_2-$ , 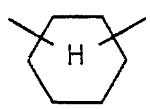 , 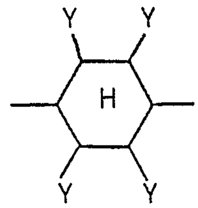 ,

$R^3$ = H, $-CH_3$, $-CF_3$;

$R^4$ = 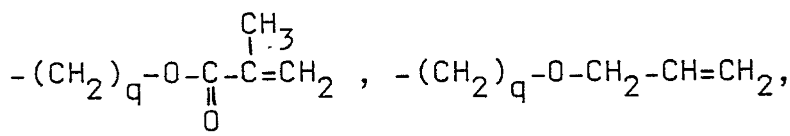

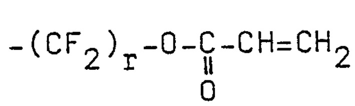 ,

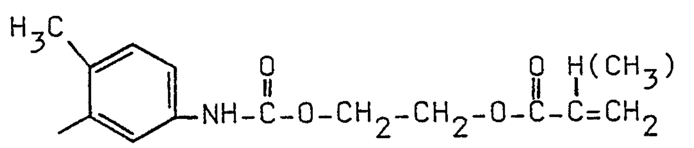 ,

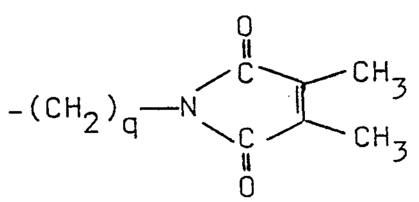 ,

wobei q, r und Y wie vorstehend definiert sind.

Die erfindungsgemäßen Photopolymeren sind Additionsprodukte von Polyhydroxyepoxiden und Monoisocyanaten. Als Polyhydroxyepoxide dienen dabei vorwiegend - gegebenenfalls halogenierte - aromatische und/oder aliphatische und/oder cycloaliphatische, gegebenenfalls Heteroatome aufweisende, und/oder heterocyclische Epoxide. Bevorzugt werden Epoxidharze mit aromatischen Partialstrukturen eingesetzt,

wobei diese vorteilhaft ein Epoxidäquivalentgewicht etwa zwischen 600 und 6000, vorzugsweise zwischen 2400 und 4000, aufweisen. Derartige Epoxidharze sind im Handel erhältlich, beispielsweise als Araldit GT 6099 (Araldit® ist ein Warenzeichen der Fa. Ciba-Geigy). Die aromatischen Partialstrukturen der Epoxidharze können vorteilhaft halogeniert, insbesondere bromiert, sein.

Als Monoisocyanate finden vorzugsweise methacrylatgruppenhaltige Isocyanate, wie Isocyanatoethylmethacrylat, und das Additionsprodukt von Hydroxyethylacrylat oder -methacrylat an 2.4-Diisocyanatotoluol sowie Gemische dieser Verbindungen Verwendung.

Anhand der nachfolgenden Formeln (1) und (2) wird die Struktur der erfindungsgemäßen photoreaktiven Polymeren auf Epoxidharzbasis beispielhaft verdeutlicht:

(1)

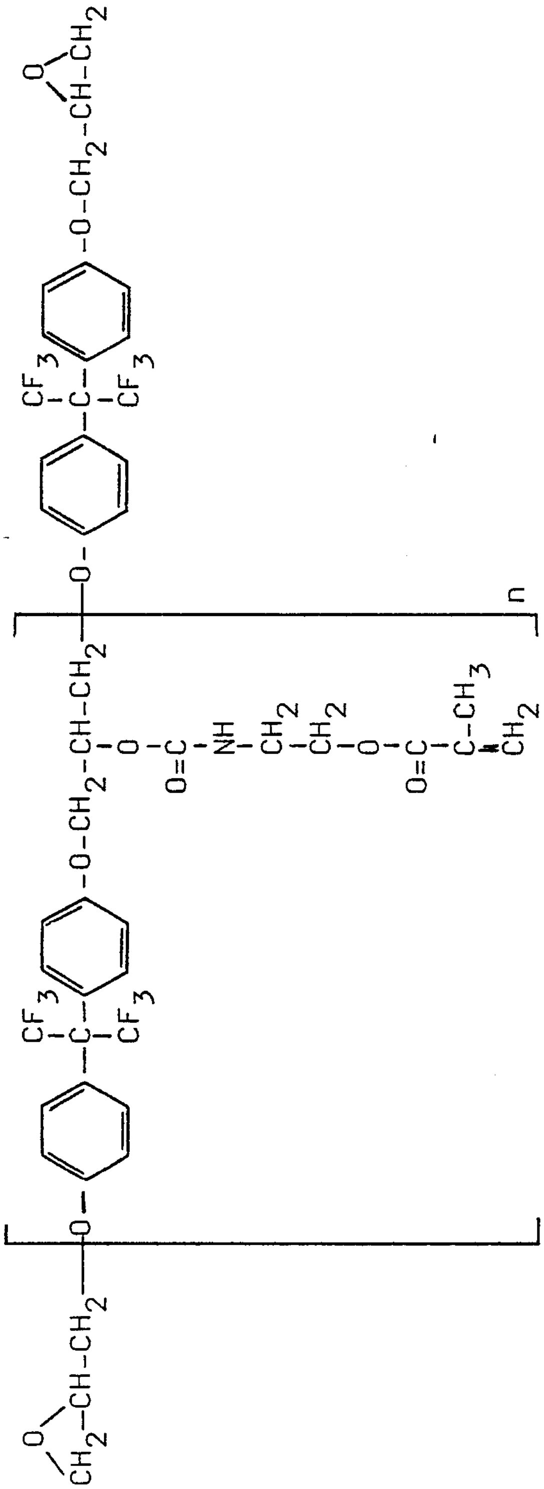

(2)

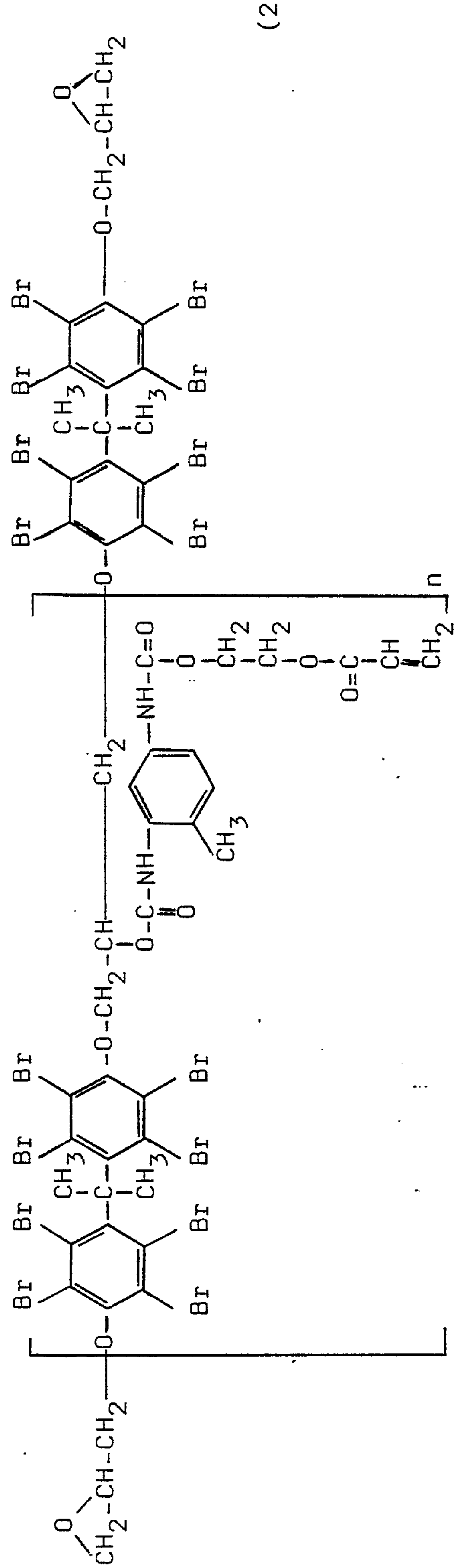

Die erfindungsgemäßen Photopolymeren werden in der Weise hergestellt, daß ein olefinisch ungesättigtes Monoisocyanat in einem organischen Lösungsmittel in Gegenwart eines Katalysators und/oder bei erhöhter Temperatur mit einem hydroxylgruppenhaltigen Epoxidharz zur Reaktion gebracht wird. Wird dabei ein Katalysator verwendet, so wird im allgemeinen bei Raumtemperatur gearbeitet. Als Katalysator wird vorzugsweise Dibutylzinndilaurat oder 1.4-Diazabicylo [2.2.2] octan eingesetzt.

Die bei der Additionsreaktion zwischen Monoisocyanat und Polyhydroxyepoxid gebildeten Produkte können in reiner Form isoliert werden (Ausbeute: 100 %). Für eine Weiterverarbeitung ist es jedoch besonders vorteilhaft und kostengünstig, die Reaktionslösung direkt zu verwenden, beispielsweise zur Beschichtung von Substraten. Dabei ist auch von Vorteil, daß die Lösungen der Photopolymeren lagerstabil sind. Im übrigen ist eine Isolierung der Photopolymeren vor der Weiterverarbeitung auch deshalb nicht erforderlich, weil deren Synthese chloridfrei verläuft.

Außer zur Verwendung als Photoresist und zur Herstellung von Schutz-und Isolierschichten, wobei eine Photostrukturierung erfolgt, können die erfindungsgemäßen Photopolymeren auch allgemein - in nichtstrukturierter Form - zur Herstellung von mit UV-Licht härtbaren Schutz-und Isolierüberzügen auf langgestrecktem Gut, wie Leitungen, und auf Substratflächen verwendet werden. Ferner können diese Photopolymeren zur Strukturierung von Substratflächen mittels Siebdrucktechnik, insbesondere von thermisch empfindlichen Substratflächen, verwendet werden, beispielsweise bei der Herstellung von Dämpfungsmassen für Oberflächenwellenfilter, wie Fernsehzwischenfrequenzfilter. Dabei kann dann anstelle einer thermischen Behandlung auch eine UV-Härtung erfolgen. Darüber hinaus können die Photopolymeren auch zur Passivierung flexi bler Schaltungen dienen. Den Lösungen der Photopolymeren können vorteilhaft mineralische Füllstoffe, insbesondere auf Siliciumdioxid-und Aluminiumoxidbasis, sowie auch weitere, üblicherweise eingesetzte Füllstoffe zugegeben werden.

Anhand von Ausführungsbeispielen soll die Erfindung noch näher erläutert werden.

Beispiel 1

Zur Herstellung eines olefinisch ungesättigten, d.h. photoreaktiven Monoisocyanats werden zu 69 Masseteilen getrocknetes Dichlormethan unter Feuchteausschluß 40 Masseteile reines 2.4-Diisocyanatotoluol und zu der dabei erhaltenen Lösung dann unter Rühren langsam 29,2 Masseteile 2-Hydroxyethylacrylat getropft. Die Reaktion wird bei Raumtemperatur durchgeführt. Nach beendeter Reaktion wird die Lösung 24 Stunden bei Raumtemperatur stehen gelassen; durch Titration der Isocyanatgruppen wird dann ein Umsatz von 99 % festgestellt. Die Reaktionslösung kann direkt zur weiteren Umsetzung eingesetzt werden. Das photoreaktive Monoisocyanat läßt sich aber durch Extraktion mit Petroleumbenzin auch in Form einer klaren viskosen Flüssigkeit als Reinsubstanz isolieren; die Charakterisierung erfolgt durch NCO-Titration.

Zu einer Lösung von 100 Masseteilen eines kernbromierten Epoxidharzes auf Basis Bisphenol A (siehe Formel (2); n = 10) in 200 Masseteilen Cyclohexanon werden bei Raumtemperatur und unter Rühren 366 Masseteile trockenes $\gamma$-Butyrolacton, 353 Masseteile trockenes N-Methylpyrrolidon und 131 Masseteile des in der vorstehend beschriebenen Weise hergestellten photoreaktiven Monoisocyanats sowie 0,3 Masseteile Dibutylzinndilaurat gegeben. Die dabei erhaltene Lösung wird bei Raumtemperatur 48 Stunden gerührt und danach mit 18 Masseteilen Ethanol versetzt, um restliche Isocyanatgruppen abzu stoppen. Nach einer Reaktionszeit von ca. 24 Stunden sind keine Isocyanatgruppen mehr nachweisbar und die Reaktionslösung ist, beispielsweise für Beschichtungen, gebrauchsfertig; die Viskosität beträgt ca. 300 mPa.s bei 23°C.

Beispiel 2

Zu einer Lösung von 100 Masseteilen des Epoxidharzes Araldit GT 6099 in 110 Masseteilen Cyclohexanon werden 55 Masseteile reines Isocyanatoethylmethacrylat und 0,15 Masseteile Dibutylzinndilaurat gegeben, dann wird das Gemisch bei Raumtemperatur 24 Stunden gerührt. Danach werden zur Reaktionslösung 17 Masseteile Ethanol gegeben, um restliche Isocyanatgruppen umzusetzen. Die Lösung wird dann 24 Stunden bei Raumtemperatur stehen gelassen. Anschließend werden 5 Masseteile Dichloracetophenon, 1,5 Masseteile Michler's Keton und 1 Masseteil 2-Isopropylimidazol (als Härter) zugesetzt, wonach die Lösung gebrauchsfertig ist. Die Viskosität der Lösung beträgt ca. 600 mPa.s bei 23°C.

Durch Aufschleudern der Lösung auf Aluminiumsubstrate und zweistündiges Trocknen bei 70°C werden 100 µm dicke homogene Schichten erhalten, die bei Bestrahlung mit einer 350 W-Quecksilberhöchstdrucklampe innerhalb von 20 s photochemisch vernetzt und damit in Lösungsmitteln, wie γ-Butyrolacton/Xylol, unlöslich werden. Die Aushärtung erfolgt bei 150°C (Dauer: 30 min).

Beispiel 3

Zu 113 Masseteilen getrocknetes Dichlormethan werden unter Feuchteausschluß 62 Masseteile 2.4-Diisocyanatotoluol und danach bei Raumtemperatur und unter Rühren langsam 51,2 Masseteile 2-Hydroxyethylmethacrylat getropft. Nach 24stündiger Reaktion bei Raumtemperatur wird der Isocyanatumsatz titri metrisch zu 99 % ermittelt. Durch Zugabe von 450 Masseteilen Petroleumbenzin wird ein Niederschlag von weißen Kristallen erhalten. Die Ausbeute an reinem photoreaktiven Monoisocyanat beträgt 93 %.

Die Charakterisierung des Monoisocyanats erfolgt NMR-spektroskopisch (Lösungsmittel: $CDCl_3$ ; innerer Standard: TMS). Dabei ergeben sich folgende Peaks: Singuletts bei 1,98 ppm ($-CH_3$ von Methacrylat), 2,22 ppm ($-CH_3$ am Aromaten), 4,41 ppm ($-O-CH_2-CH_2-O-$), 5,61 und 6,15 ppm (olefinische Protonen) sowie 7,04 und 7,22 ppm (aromatische Protonen). Ein Vergleich mit den Spektren von Bisadditionsprodukten (kein Singulett bei 2,22 ppm) und Gemischen zeigt, daß das 2-Hydroxyethylmethacrylat bei der durchgeführten Reaktion nur an eine Isocyanatgruppe addiert wurde, und dies ist - wie bekannt -die sterisch ungehinderte 4-Stellung.

Zu einer Lösung von 87 Masseteilen des in der vorstehend beschriebenen Weise hergestellten photoreaktiven Monoisocyanats in einem Gemisch von 170 Masseteilen γ-Butyrolacton, 138 Masseteilen N-Methylpyrrolidon und 0,015 Masseteilen Dibutylzinndilaurat werden unter Feuchteausschluß 63 Masseteile des Epoxidharzes Araldit GT 6099 gegeben und unter Rühren bei einer Temperatur von 50°C zur Reaktion gebracht (Dauer: 12 Stunden). Danach werden bei dieser Temperatur zur Reaktionslösung zunächst 8 Masseteile 2-Hydroxyethylmethacrylat und nach weiteren 5 Stunden 4 Masseteile Ethanol gegeben. Nach 24 Stunden weist die Harzlösung eine Viskosität von ca. 200 mPa.s bei 23°C auf und ist für die Durchführung von Beschichtungen gebrauchsfertig.

Beispiel 4

Zu einer Lösung von 66,8 Masseteilen reinem 2.4-Diisocyanatotoluol in 115 Masseteilen Dichlormethan wird bei Raumtempera tur unter Rühren und Feuchteausschluß ein Gemisch von 23,6 Masseteilen reinem 2-Hydroxyethylacrylat und 24,8 Masseteilen reinem 2-Hydroxyethylmethacrylat langsam zugetropft. Nach einer Reaktionsdauer von 30 Stunden bei Raumtemperatur wird durch Titration ein Isocyanatumsatz von 98 % ermittelt.

Die erhaltene Lösung des photoreaktiven Monoisocyanats wird mit einer Lösung von 98 Masseteilen des Epoxidharzes Araldit GT 6099 in 397 Masseteilen γ-Butyrolacton und mit 0,22 Masseteilen Dibutylzinndilaurat vereinigt. Nach 24stündiger Reaktion bei Raumtemperatur werden zur Reaktionslösung 15 Masseteile Ethanol gegeben. Nach weiteren 24 Stunden ist die Lösung für Beschichtungen gebrauchsfertig, nachdem 2 Masseteile eines Epoxidhärters zugesetzt wurden.

## Ansprüche

1. Photopolymere auf Epoxidharzbasis, **dadurch gekennzeichnet**, daß sie aus Additionsprodukten von olefinisch ungesättigten Monoisocyanaten mit hydroxylgruppenhaltigen Epoxiden bestehen.

2. Photopolymere nach Anspruch 1, **dadurch gekennzeichnet**, daß das Epoxid - gegebenenfalls halogenierte - aromatische Partialstrukturen aufweist.

3. Photopolymere nach Anspruch 1 oder 2, **dadurch gekennzeichnet**, daß das Epoxid ein Epoxidäquivalentgewicht von 600 bis 6000, insbesondere von 2400 bis 4000, besitzt.

4. Photopolymere nach einem der Ansprüche 1 bis 3, **dadurch gekennzeichnet**, daß das olefinisch ungesättigte Monoisocyanat ein methacrylatgruppenhaltiges Isocyanat, insbesondere Isocyanatoethylmethacrylat, ist.

5. Photopolymere nach einem der Ansprüche 1 bis 3, **dadurch gekennzeichnet**, daß das olefinisch ungesättigte Monoisocyanat ein Additionsprodukt von Hydroxyethylacrylat oder -methacrylat an 2.4-Diisocyanatotoluol ist.

6. Verfahren zur Herstellung von Photopolymeren nach einem oder mehreren der Ansprüche 1 bis 5, **dadurch gekennzeichnet,** daß ein olefinisch ungesättigtes Monoisocyanat in einem organischen Lösungsmittel in Gegenwart eines Katalysators und/oder bei erhöhter Temperatur mit einem hydroxylgruppenhaltigen Epoxidharz zur Reaktion gebracht wird.

7. Verfahren nach Anspruch 6, **dadurch gekennzeichnet,** daß als Katalysator Dibutylzinndilaurat oder 1.4-Diazabicyclo[2.2.2]octan verwendet wird.

8. Verfahren nach Anspruch 6 oder 7, **dadurch gekennzeichnet,** daß der Lösung des Photopolymeren ein mineralischer Füllstoff zugesetzt wird.

9. Verwendung der Photopolymeren nach einem oder mehreren der Ansprüche 1 bis 5 zur Herstellung UV-härtbarer Kunststoffüberzüge auf langgestrecktem Gut, wie Leitungen, und auf Substratflächen.

10. Verwendung der Photopolymeren nach einem oder mehreren der Ansprüche 1 bis 5 zur Herstellung von Dämpfungsmassen für Oberflächenwellenfilter, wie Fernsehzwischenfrequenzfilter, und zur Passivierung flexibler Schaltungen.